# EUROPÄISCHE PATENTSCHRIFT

(11) **EP 0 711 312 B1**
(45) Veröffentlichungstag und Bekanntmachung des Hinweises auf die Patenterteilung: **19.11.1997**
(21) Anmeldenummer: 94924239.0
(22) Anmeldetag: 06.07.1994
(51) Int. Cl.: C08F 8/06, C08F 8/36

(54) **SULFONIERTE UND OXIDIERTE INDEN-POLYMERISATE UND IHRE VERWENDUNG ALS DISPERGIERMITTEL**
SULPHONATED AND OXIDISED INDENE POLYMERS AND THEIR USE AS DISPERGENTS
POLYMERES SULFONES ET OXYDES D'INDENE ET LEUR UTILISATION COMME AGENTS DISPERSANTS

(30) Priorität: 31.07.1993 DE 4325752
(43) Veröffentlichungstag der Anmeldung: 15.05.1996
(73) Patentinhaber: BASF AKTIENGESELLSCHAFT, 67056 Ludwigshafen (DE)
(72) Erfinder: BECKMANN, Eberhard, Dr., D-67435 Neustadt (DE); ERREN, Stefan, D-67169 Kallstadt (DE); BAUS, Ulf, D-69221 Dossenheim (DE); ZIMMERMANN, Norbert, D-67165 Waldsee (DE); KROMM, Erich, 10450 Penang (MY); TAEGER, Klaus, D-67251 Freinsheim (DE); BORSCHEL, Eva-Marie, D-67061 Ludwigshafen (DE); BURY, Willi, D-67063 Ludwigshafen (DE)
(86) Internationale Anmeldenummer: EP9402207
(87) Internationale Veröffentlichungsnummer: WO9504088

(56) Entgegenhaltungen:
- FR-A- 2 145 302
- FR-A- 2 337 146
- US-A- 2 877 213

## Beschreibung

Die vorliegende Erfindung betrifft neue Inden-Polymerisate, welche durch Polymerisation des bei der fraktionierenden Destillation der Spaltprodukte eines naphthenischen Rückstandsöls erhältlichen, Inden oder Inden-Derivate enthaltenden C₉-Schnittes, anschließende Sulfonierung und nicht kettenabbauende Oxidation bei erhöhten Temperaturen erhältlich sind, sowie deren Verwendung als neuartiges Dispergiermittel auf den verschiedensten technischen Gebieten. Weiterhin sind Gegenstand der vorliegenden Erfindung Farbstoff- und Pigmentpräparationen, die diese Inden-Polymerisate als Dispergiermittel enthalten.

Aus der DE-A 26 59 375 (1) sind Alkalimetallsalze sulfonierter Styrol-Inden-Kohlenwasserstoffharze bekannt, die durch Sulfonierung der Styrol-Inden-Kohlenwasserstoff-Ausgangsharze mit beispielsweise Oleum in Lösung bei Temperaturen bis zu 65°C erhältlich sind. Sie eignen sich als Verflüssigungsmittel für mineralische Pasten und Bindemittel, insbesondere für Beton.

In der JP-A 90/225 355 (2) werden destillativ gereinigte und einer Polymerisation unterworfene durch thermische Zersetzung erhaltene Restöle aus Erdölfraktionen, die Indene und Styrole enthalten, nach Sulfonierung bei niedrigen Temperaturen und Neutralisation als Zusatzstoffe für Zement empfohlen.

Farbstoffzubereitungen oder Färbebäder enthalten üblicherweise als Dispergiermittel Ligninsulfonate, Sulfonate von Phenol-Formaldehyd-Kondensaten oder Naphthalinsulfonsäure-Formaldehyd-Kondensate. Die Mittel weisen eine Reihe anwendungstechnischer Mängel auf, insbesondere ist die Einsatzmenge zu hoch, die Dispersionsstabilität zu gering und die erzielte Färbung zu schwach oder zu unegal. Nach dem bestimmungsgemäßen Gebrauch gelangen die genannten Produkte ins Abwasser und sind daraus in Kläranlagen nur zu einem geringen Teil biologisch abbaubar oder eliminierbar.

Der vorliegenden Erfindung lag die Aufgabe zugrunde, Dispergiermittel für verschiedene technische Anwendungszwecke, insbesondere für Farbstoffzubereitungen und Färbebäder, zur Verfügung zu stellen, die gegenüber den bekannten Dispergiermitteln zu einem erheblichen Grade eliminierbar oder abbaubar sind und gleichzeitig bessere anwendungstechnische Eigenschaften aufweisen.

Demgemäß wurden sulfonierte und oxidierte Inden-Polymerisate gefunden, welche durch
(a) Polymerisation des bei der fraktionierenden Destillation der Spaltprodukte der thermischen Spaltung eines naphthenischen Rückstandsöls erhältlichen C₉-Schnittes, welcher als polymerisierbare Monomere 10 bis 50 Gew.-% Inden oder Inden-Derivaten der allgemeinen Formel I 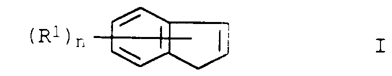 in der R¹ für Wasserstoff, Methyl oder Ethyl steht und n 1 oder 2 bedeutet, und 10 bis 60 Gew.-% Styrol oder Styrol-Derivaten der allgemeinen Formel II 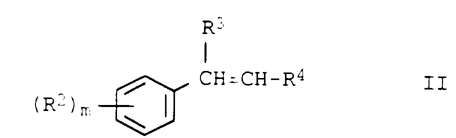 in der R², R³ und R⁴ für Wasserstoff, Methyl oder Ethyl stehen und m 1 oder 2 bedeutet, enthält,
(b) Sulfonierung des Polymerisates mit einem Sulfonierungsmittel bei Temperaturen von 40 bis 130°C und
(c) nicht kettenabbauende Oxidation des Polymerisates bei Temperaturen von 80 bis 180°C
erhältlich sind.

Der Rest R¹ in Formel I steht vorzugsweise für Wasserstoff oder Methyl, n bedeutet vorzugsweise 1. Als Monomethylindene kommen beispielsweise 2-, 3-, 4-, 5-, 6- und 7-Methylinden in Betracht.

Die Polymerisation in Schritt (a) wird normalerweise durch Protonensäuren, z.B. Schwefelsäure, oder durch Lewis-Säuren, z.B. Bortrifluorid, katalysiert und läuft deshalb in der Regel nach ionischen Mechanismen ab. Sollen beim vorliegenden System alle drei Schritte (a), (b) und (c) in einem Reaktionsgefäß ohne Zwischenisolierungen, also im "Eintopfverfahren", durchgeführt werden, ist es besonders günstig, die Polymerisation (a) mit einer geringen Menge des später bei (b) benötigten sauren Sulfonierungsmittels, vorzugsweise Schwefelsäure oder Oleum, zu katalysieren. Man kann aber auch in vorteilhafter Weise kontinuierlich arbeiten und die zu polymerisierenden Verbindungen und das saure Sulfonierungsmittel gleichzeitig in beispielsweise eine Rührkesselkaskade oder einen Rohrreaktor eindosieren.

Der Polymerisationsgrad sollte zur Erzielung guter anwendungstechnischer Eigenschaften nicht zu hoch sein und etwa bei 2 bis 50, vorzugsweise 3 bis 10 liegen.

Als Sulfonierungsmittel in Schritt (b) eignen sich im Prinzip alle gebräuchlichen Mittel wie Chlorsulfonsäure, Chlorhydrin-Schwefelsäure oder Sulfurylchlorid. Besonders günstig sind jedoch Schwefelsäure, vorzugsweise konzentrierte Schwefelsäure, und Oleum, wobei Oleum einen SO₃-Gehalt bis etwa 90 Gew.-% aufweisen kann. Die besten Ergebnisse erzielt man mit ca. 50 bis 70 gew.-%igem Oleum. Die Sulfonierung wird nach üblicher Art und Weise durchgeführt, indem man zweckmäßigerweise die gewünschte Menge Sulfonierungsmittel, beim vorliegenden System vorzugsweise 0,3 bis 1,7 mol, insbesondere 0,5 bis 1,3 mol berechnetes SO₃ pro Mol I, zugibt und gegebenenfalls Wärme abführt, da die Reaktion exotherm abläuft. Die optimale Sulfonierungstemperatur liegt im Bereich von etwa 45 bis 120°C, insbesondere 50 bis 100°C, je nachdem ob mit oder ohne Lösungs- oder Verdünnungsmittel gearbeitet wird.

Die Oxidation in Schritt (c) kann im Prinzip mit jedem für die Oxidation von benzylischen oder allylischen C-H-Bindungen geeigneten Oxidationsmittel, z.B. Luft oder Sauerstoff in Gegenwart eines Katalysators, als separat sich anschließende Stufe durchgeführt werden. Bei vorliegenden System ist es jedoch besonders günstig, als Oxidationsmittel dasselbe Agens, vorzugsweise Schwefelsäure oder Oleum, wie für die Sulfonierung in (b) zu verwenden und die Schritte (b) und (c) durch sukzessives Erhöhen der Temperatur bis auf 180°C, vorzugsweise bis auf 165°C, ineinander übergehen zu lassen. Die nicht kettenabbauende Oxidation setzt erst merklich bei Temperaturen ab 80°C, insbesondere ab 110°C ein. Wird ein Sulfonierungsmittel als Oxidationsmittel verwendet, setzt man in der Regel 0,3 bis 1,7 mol, insbesondere 0,5 bis 1,3 mol berechnetes SO₃ pro Mol I ein.

Die erfindungsgemäßen Inden-Polymerisate weisen somit neben Sulfonsäuregruppen am Benzolkern höchstwahrscheinlich teilweise Carbonyl- und/oder Carboxylgruppen an der intakten Polymer- bzw. Oligomerkette auf. Mögliche Strukturelemente dieser Polymerisate könnten sein:

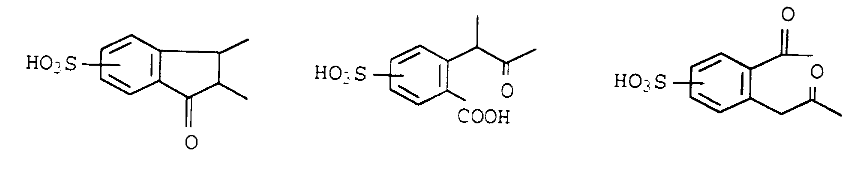

Bei Verwendung von Schwefelsäure oder Oleum als Oxidationsmittel zeigt die Analytik des bei der Umsetzung in molaren Verhältnissen als Abgas gebildeten SO₂, daß etwa 10 bis 70 mol-%, vorzugsweise 15 bis 55 mol-% Carbonyl- und/oder Carboxylgruppen, bezogen auf I, entstehen.

Die Reste R³ bis R⁴ in der allgemeinen Formel II stehen vorzugsweise für Wasserstoff oder Methyl und m bedeutet vorzugsweise 1. Steht R² im Fall m = 1 für Methyl oder Ethyl, liegt eine ortho-, meta- oder vorzugsweise para-Substitution am Phenylkern vor. Steht R² im Fall m = 2 für Methyl oder Ethyl, ist das Substitutionsmuster am Phenylkern vorzugsweise 2,4. Typische Vertreter für die Verbindungen II sind Styrol, α-Methylstyrol, β-Methylstyrol sowie o-, m- und p-Vinyltoluol.

Naphthenische Rückstandsöle fallen beispielsweise beim Cracken von Leichtbenzin an. Sie werden auch als hochsiedende aromatische Kohlenwasserstofföle bezeichnet. Das naphthenische Rückstandsöl wird üblicherweise bei Temperaturen von 1400 bis 1700°C thermisch gespalten. Die Spaltprodukte werden dann einer fraktionierenden Destillation zugeführt. Die Fraktion, die den Hauptanteil an Verbindungen mit 9 C-Atom enthält, wird gesammelt und zur Herstellung der erfindungsgemäßen Inden-Polymerisate eingesetzt.

Ein typischer C₉-Schnitt besteht aus folgenden Hauptkomponenten [in Gew.-%]:

| | |
|---|---|
| Inden | 10 - 30 |
| Methylindene | 5 - 30 |
| Styrol | 5 - 10 |
| α-Methylstyrol | 1 - 4 |
| β-Methylstyrol | 2 - 6 |
| Vinyltoluole | 10 - 25 |
| Xylole | 3 - 6 |
| Methyl-ethylbenzole | 5 - 9 |
| Trimethylbenzole | 5 - 9 |
| Diethylbenzole | 2 - 6 |
| Indan | 1 - 4 |
| Naphthalin | 5 - 8 |
| weitere C₁₀- und C₁₁-Kohlenwasserstoffe | 8 - 13 |

Dieser C₉-Schnitt enthält ca. 45 bis 60 Gew.-%, insbesondere 50 bis 55 Gew.-% copolymerisierbare Monomere, der Anteil an Verbindungen I beträgt vorzugsweise ca. 20 bis 35 Gew.-%. Der Rest besteht im wesentlichen aus aromatischen Kohlenwasserstoffen, die für den Verdünnungseffekt sorgen. Sie werden zum Teil in Schritt (b) mitsulfoniert und können bei Verbleiben im Endprodukt so unter Umständen die anwendungstechnischen Eigenschaften als Dispergiermittel noch verbessern.

Die nicht polymerisierbaren Komponenten im C₉-Schnitt oder zugesetzte organische Lösungsmittel, insbesondere inerte organische Lösungsmittel, beispielsweise Kohlenwasserstoffe, Chlorkohlenwasserstoffe oder Nitrokohlenwasserstoffe wie Toluol, Xylole, Mesitylen, Tetrachlorkohlenstoff, Tetrachlorethan, Dichlorethan, Chlorbenzol, Dichlorbenzole oder Nitrobenzol oder höhersiedende Carbonsäureester wie Benzoesäuren.ethylester oder -ethylester, können auch, nachdem sie bei der Polymerisation (a) und/oder der Sulfonierung (b) als Verdünnungsmittel gewirkt haben, durch Destillation oder, falls diese mitsulfoniert wurden, durch Ultrafiltration oder Membranfiltration abgetrennt werden. Carbonsäureester lassen sich auch durch Verseifen und gegebenenfalls Abdestillieren der Hydrolyseprodukte entfernen.

Eine Möglichkeit zur geringfügigen Modifikation der erfindungsgemäßen Inden-Polymerisate besteht darin, daß man das Polymerisat vor oder vorzugsweise nach der Oxidation (c) zusätzlich mit bis zu 30 Gew.-%, vorzugsweise bis zu 15 Gew.-% Formaldehyd (berechnet 100 %ig) umsetzt. Man setzt üblicherweise hierfür eine 10 bis 50 gew.-%ige wäßrige Formaldehyd-Lösung ein. Die dabei ablaufende Kondensationsreaktion wird zweckmäßigerweise bei leicht erhöhter Temperatur durchgeführt, etwa bei 70 bis 110°C.

Im Anschluß an die Oxidation (c) wird zweckmäßigerweise im Hinblick auf Anwendungen in wäßrigem Milieu organisches, mit Wasser nicht oder nur wenig mischbares Lösungs- oder Verdünnungsmittel wie oben beschrieben abgetrennt und das Produkt gewünschtenfalls wie üblich neutralisiert und mit Wasser verdünnt.

Die DE-A 40 18 873 beschreibt Kondensate erhältlich durch Sulfonieren aromatischer Naphthalinfraktionen bei 120-160°C. Derartige Kondensate finden als Dispergiermittel in Farbstoffzubereitungen Verwendung.

Aus der DE-A 40 18 873 ist weiterhin bekannt, daß die Anwesenheit von aromatischen oder langkettigen aliphatischen Carbonsäuren oder deren Salzen oder Anhydriden die biologische Eliminierbarkeit oder Abbaubarkeit von Dispergiermitteln günstig beeinflußt. Daher empfiehlt sich unter Umständen die Zugabe einer solchen Carbonsäure, z.B. von Benzoesäure, zum Ausgangsmaterial, d.h. zum C₉-Schnitt, bei der Herstellung der erfindungsgemäßen Inden-Polymerisate. Verwendet man einen Benzoesäureester als Lösungsmittel und hydrolysiert diesen nach beendeter Umsetzung, empfiehlt sich aus demselben Grunde, die entstandene Benzoesäure oder ihre Salze im Produkt zu belassen.

Gegenstand der vorliegenden Erfindung ist auch ein Verfahren zur Herstellung von sulfonierten und oxidierten Inden-Polymerisaten, gekennzeichnet durch
(a) Polymerisation des bei der fraktionierenden Destillation der Spaltprodukte der thermischen Spaltung eines naphthenischen Rückstandsöls erhältlichen C₉-Schnittes, welcher als polymerisierbare Monomere 10 bis 5C Gew.-% Inden oder Inden-Derivaten der allgemeinen Formel I 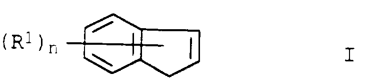 in der R¹ für Wasserstoff, Methyl oder Ethyl steht und n 1 oder 2 bedeutet, und 10 bis 60 Gew.-% Styrol oder Styrol-Derivaten der allgemeinen Formel II 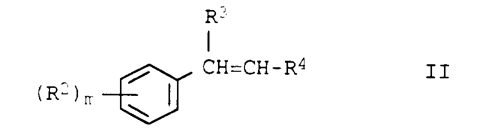 in der R², R³ und R⁴ für Wasserstoff, Methyl oder Ethyl stehen und m 1 oder 2 bedeutet, enthält,
(b) Sulfonierung des Polymerisates mit einem Sulfonierungsmittel bei Temperaturen von 40 bis 130°C und
(c) nicht kettenabbauende Oxidation des Polymerisates bei Temperaturen von 80 bis 180°C.

Die erfindungsgemäßen sulfonierten und oxidierten Inden-Polymerisate sind leicht in Wasser loslich und eignen sich in hervorragendem Maße als Dispergiermittel in Farbstoff- und Pigmentpräparationen und auch als Dispergiermittel in Färbebädern beim Färben von Textilien.

Farbstoffe, die in Wasser unter Verwendung von Dispergiermitteln zu Farbstoffpräparationen formuliert werden, sind die in Wasser schwerlöslichen bzw. unlöslichen Farbstoffe, z.B. Küpenfarbstoffe, Dispersionsfarbstoffe sowie in Wasser schwer- bis unlösliche optische Aufheller. Dispersionsfarbstoffe sind z.B. in Wasser unlösliche bis schwerlösliche Azofarbstoffe, Farbstoffe aus der Reihe der Chinophthalone und deren nicht wasserlösliche Derivate, Anthrachinonfarbstoffe sowie Farbstoffe aus anderen Verbindungsklassen, die in Wasser schwer- bis unlöslich sind und welche auf synthetisches Fasermaterial wie lineare Polyester aus wäßrigem Bad aufziehen.

Bei der Anwendung in Farbstoffpräparationen benötigt man, bezogen auf 100 Gew.-Teile Farbstoff, 5 his 500, vorzugsweise 25 bis 400 Gew.-Teile der erfindungsgemäßen Dispergiermittel. Beim Einsatz als Färbereihilfsmittel in Färbebädern zum Färben von Textilien werden die erfindungsgemäßen Dispergiermittel üblicherweise in Mengen von 0,5 bis 5 g/l, bezogen auf das Färbebad, eingesetzt.

Die so erhältlichen Farbstoffpräparationen sind über einen längeren Zeitraum lagerstabil, gestatten einwandfreie egale Wickelkörperfärbungen ohne Abfiltrationen von Farbstoff während des Färbevorgangs, führen vor allem bei Küpenfärbungen zu tiefem und gleichmäßigem Farbbild und sind zu einem erheblichen Grad abbaubar oder zumindest eliminierbar.

Insbesondere jedoch ergeben die erfindungsgemäßen Dispergiermittel Farbstoff- und Pigmentpräparationen mit hoher Dispersionsstabilität und erlauben eine hervorragende Dispergierung bei wesentlich geringeren Einsatzmengen als die üblichen Mittel des Standes der Technik.

Beispielsweise zeigen die erfindungsgemäßen Dispergiermittel gegenüber einem üblichen Naphthalinsulfonsäure-Formaldehyd-Kondensat eine etwa doppelt so hohe Dispersionsstabilität und benötigen nur etwa die Hälfte bis ²/₃ der Einsatzmenge zur Erzielung vergleichbarer Resultate.

Den erfindungsgemäßen Dispergiermitteln können weiterhin hierbei übliche Hilfsmittel in einer Menge bis zu ca. 5 Gew.-% zugesetzt werden, z.B. andere Dispergatoren, Tenside, Entschäumer, Hydrotrope, Stellmittel, Komplexierungsmittel oder Biozide.

Die erfindungsgemäßen Dispergiermittel können auch mit guten Ergebnissen in Pigmentpräparationen eingesetzt werden. Derartige Pigmentpräparationen können dann beispielsweise für die Einfärbung von Tapeten, Papiermassen, Pflanzenschutzmitteln, Bauwerk; stoffen, Detergentien oder Malfarben verwendet werden.

Die erfindungsgemäßen Dispergiermittel eignen sich weiterhin auch in hervorragender Weise in Gerbereimittelformulierungen, d.h. als Hilfsmittel bei der Herstellung von Leder und Pelzen, beispielsweise als Dispergiermittel bei der Einfärbung von Leder und Pelzen oder als Gerbstoff bei der Nachgerbung von Leder und Pelzen.

Die erfindungsgemäßen Dispergiermittel können weiterhin auch mit gutem Erfolg bei der Kunststoffherstellung verwendet werden, beispielsweise als Dispergatoren oder Emulgatoren bei der Latex-Herstellung, vorzugsweise durch Emulsionspolymerisation, sowie bei der Herstellung von Paraffin-Dispersionen.

Die erfindungsgemäßen Dispergiermittel können weiterhin auch mit guten Resultaten in Pflanzenschutzformulierungen eingesetzt werden. Beispiele hierfür sind die Verwendung als Dispergatoren oder Emulgatoren in Pulver- oder Flüssigzubereitungen von Herbiziden, Fungiziden oder Insektiziden.

In Düngemittelformulierungen eignen sich die erfindungsgemäßen Dispergiermittel gut als Antibackmittel.

In der Bauindustrie können die erfindungsgemäßen Dispergiermittel in hervorragender Weise als Verflüssiger für Zement-, Beton- und Gipsformulierungen oder als Spruhhilfsmittel, z.B. für Fugenmassen, eingesetzt werden.

Bei der Wasserbehandlung, z.B. der Boilerwasserbehandlung, der Papierherstellung und der Metallbehandlung, beispielsweise in Kühl- und Schmiermittelformulierungen, eignen sich die erfindungsgemäßen Dispergiermittel ebenfalls ausgezeichnet.

Gegenstand der vorliegenden Erfindung sind weiterhin Farbstoff- und Pigmentpräparationen selbst, welche als Dispergiermittel 5 bis 500 Gew.-Teile, vorzugsweise 25 bis 400 Gew.-Teile, bezogen auf 100 Gew.-Teile Farbstoff bzw. Pigment, der erfindungsgemäßen sulfonierten und oxidierten Inden-Polymerisate enthalten.

### Herstellungsbeispiele

### Beispiel 1

256,4 g eines C₉-Schnittes aus der fraktionierenden Destillation der Spaltprodukte bei der thermischen Spaltung eines naphthalenischen Rückstandsöls der Zusammensetzung [in Gew.-%]

| | |
|---|---|
| C₃-C₉-Nichtaromaten | 0,43 |
| Benzol | < 0,01 |
| Toluol | 0,06 |
| Ethylbenzol | 0,66 |
| p-Xylol | 0,51 |
| m-Xylol | 1,98 |
| o-Xylol | 2,08 |
| Styrol | 7,63 |
| iso-Propylbenzol | 0,08 |
| n-Propylbenzol | 0,87 |
| 1-Methyl-2-ethylbenzol | 1,45 |
| 1-Methyl-3-ethylbenzol | 4,17 |
| 1-Methyl-4-ethylbenzol | 1,13 |
| 1,2,3-Trimethylbenzol | 1,68 |
| 1,3,5-Trimethylbenzol | 1,43 |
| 1,2,4-Trimethylbenzol | 3,86 |
| α-Methylstyrol | 2,07 |
| Indan | 2,27 |
| β-Methylstyrol | 3,56 |
| Vinyltoluole | 16,25 |
| Inden | 17,92 |
| weitere C₉-Aromaten | 1,39 |
| 1,3-Dimethyl-5-ethylbenzol | 1,18 |
| 1,2-Diethylbenzol | 0,65 |
| 1,3-Diethylbenzol | 0,50 |
| 1,4-Diethylbenzol | 2,67 |
| Dicyclopentadien | < 0,01 |
| Naphthalin | 6,11 |
| Methylindene | 6,11 |
| α-Methylnaphthalin | 0,10 |
| β-Methylnaphthalin | 0,18 |
| weitere C₁₀-C₁₁-Kohlenwasserstoffe | 10,88 |
| Gesamt | 100,00 |
| Gesamt polymerisierbare | 53,68 |
| Monomere und einer Dichte bei 15°C von | 0,929 g/ml |

sowie 48,8 g (0,4 mol) Benzoesäure wurden in einer Rührapparatur vorgelegt und auf 60°C erwärmt. Lanach wurden 217,2 g (entsprechend 2,54 mol Gesamt-SO₃) 65 gew.-%iges Oleum innerhalb von 4 Stunden bei 60-65°C zugetropft. Die Reaktionstemperatur stieg wegen der anfangs stark exothermen Reaktion kurzzeitig auf 95°C an, so daß die Oleumzugabe zeitweise unterbrochen werden mußte. Nach vollständiger Oleumzugabe wurde 4 Stunden bei 60°C und anschließend 5 Stunden bei 135°C nachgerührt. Danach wurde die viskose Reaktionsmasse auf ca. 100°C abgekühlt. Es wurden 300 g Wasser eingerührt. 400 g der erhaltenen Lösung wurden bei Beispiel 2 weiterverarbeitet; die restliche Lösung wurde mit weiterem Wasser auf einen Feststoffgehalt von ca. 50 Gew.-% verdünnt und mit 89 g (entsprechend 1,12 mol NaOH) 50 gew.-%iger Natronlauge auf einen pH-Wert von 7-8 eingestellt. Man erhielt 510 g einer ca. 50 gew.-%igen Lösung. Die in einer Waschflasche als Sulfit aufgefangene SO₂-Menge betrug 0,53 mol.

### Beispiel 2

400 g der Produktlösung aus Beispiel 1 wurden in einer Rührapparatur vorgelegt und mit 50 g entsprechend 0,5 mol CH₂O) einer 30 gew.-%igen wäßrigen Formaldehyd-Lösung versetzt. Anschließend wurde 8 Stunden bei 100°C gerührt. Dann wurde mit 500 g Wasser verdünnt und mit 102 g (entsprechend 1,28 mol NaOH) 50 gew.-%iger Natronlauge auf einen pH-Wert von 10,5 eingestellt. Anschließend wurde noch 1 Stunde bei 90°C nachgerührt, auf Raumtemperatur abgekühlt und mit ca. 8 g 20 gew.-%iger Schwefelsäure auf einen pH-Wert von 8-9 eingestellt. Man erhielt 965 g einer 23 gew.-%igen Lösung.

### Beispiel 3

250 g des C₉-Schnittes aus Beispiel 3 wurden in einer Rührapparatur vorgelegt und auf 45°C erwärmt. Danach wurden ca. 3 g 65 gew.-%iges Oleum zugetropft, wobei eine stark exotherme Reaktion einsetzte. Die Temperatur stieg dabei auf 90°C an. Nach Abkühlung auf 65°C wurden die nicht polymerisierbaren flüchtigen Anteile im Wasserstrahlvakuum abdestilliert. Anschließend wurden weitere 82,5 g (entsprechend zusammen 1,0 mol Gesamt-SO₃) 65 gew.-%iges Oleum zugetropft. Die Umsetzung verlief weiterhin exotherm und die Viskosität nahm stetig zu. Die Innentemperatur wurde allmählich auf 100°C angehoben, um die Reaktionsmischung rührbar zu halten. Nach Ende der Oleumzugabe wurde die Innentemperatur auf 150°C erhöht und weitere 5 Stunden bei dieser Temperatur gerührt. Nach Abkühlung auf 120°C wurden 500 g Wasser zugegeben. Die Reaktionsmasse löste sich in kurzer Zeit vollständig auf. Man erhielt 650 g einer 30 gew.-%igen Lösung. Die in einer Waschflasche als Sulfit aufgefangene SO₂-Menge betrug 0,50 mol.

### Vergleichsbeispiel A (gemäß DE-A 26 59 375)

200 g eines handelsüblichen Styrcl-Inden-Kohlenwasserstoffharzes vom Erweichungspunkt 85°C (Norsolen® S85 der Fa. Cray Valleg) wurden in 400 g Tetrachlormethan vorgelegt und auf 55°C erwärmt. Danach wurden 408,2 g 98 gew.-%ige Schwefelsäure innerhalb von 1 Stunde bei 60 bis 65°C zugetropft. Anschließend rührte man 5 Stunden bei 60 bis 65°C nach und kühlte auf Raumtemperatur ab. Nach Neutralisation mit 1400 g 25 gew.-%iger Natronlauge wurden die beiden Phasen getrennt. Die organische Phase (472 g) wurde verworfen, die wäßrige Phase (1838 g) nochmals mit 750 g Wasser verdünnt, um entstandenen kristallinen Bodensatz wieder aufzulösen, und mit 146 g 22 gew.- %iger Schwefelsäure auf pH 8-9 eingestellt. Man erhielt 2520 g einer 22,1 gew.-%igen Lösung.

### Vergleichsbeispiel B (gemäß DE-A 26 59 375)

200 g des gleichen Styrol-Inden-Kohlenwasserstoffharzes wie in Vergleichsbeispiel A wurden in 400 g Tetrachlormethan vorgelegt und auf 40°C erwärmt. Danach wurden 180 g Chlorsulfonsäure innerhalb von 2 Stunden bei 40°C zugetropft. Anschließend rührte man 1 Stunde bei 60°C nach und kühlte auf Raumtemperatur ab. Nach Neutralisation mit 700 g 9 gew.-%iger Natriumcarbonat-Lösung wurden die beiden Phasen getrennt. Die organische Phase (421 g) wurde verworfen, die wäßrige Phase nochmals mit 500 g Wasser verdünnt, um entstandenen kristallinen Bodensatz wieder aufzulösen, und mit 54 g 50 gew.-%iger Natronlauge auf pH 7-8 eingestellt. Man erhielt 1495 g einer 20 gew.-%igen Lösung.

### Anwendungsbeispiele

Die Feinverteilung in den Farbstoffzubereitungen wurde nach dem Schleudertest nach Richter und Vescia, Melliand Textilberichte, 1965, Heft 6, S. 621-625, charakterisiert.

Die Zahlenwerte entsprechen dem Farbstoffanteil in %, der beim Zentrifugieren bei den Umdrehungszahlen von 1000, 2000 und 4000 Umdrehungen/Minute nach 5 Minuten sedimentiert (1. bis 3. Wert) und der zum Schluß noch in der Dispersion verbleibt (4. Wert). Farbstoffzubereitungen mit kleinen Sedimentationswerten und hohem Endwert sind besonders feinteilig.

### Beispiel 4

20 g des blauen Dispersionsfarbstoffes C.I. Nummer 11365 (berechnet trocken) in Form des wasserfeuchten Preßkuchens wurden mit 10 g des Dispergiermittels aus Beispiel 1, 10 g Sorbit als 70 gew.-%ige wäßrige Lösung, 1 g eines handelsüblichen Biozids (1,2-Benzisothiazolin-3-on als 9.5 gew.-%ige Lösung in Propylenglykol) und Wasser auf 100 g Gesamtgewicht mittels Schnellmischer angeteigt und in einer Rührwerkskugelmühle mit Mahlkörpern aus Glas bis zur Erzielung einer guten Feinverteilung vermahlen. Der pH-Wert lag bei 8,5.

Beim Schleudertest wurden folgende Werte erzielt: 5/8/22/65.

Die erhaltene Farbstoffzubereitung war dünnflüssig und lagerstabil und eignete sich sehr gut zum Färben von Polyesterfasern und -geweben nach allen dafür gängigen Färbeverfahren. Insbesondere beim Färben von Mischgeweben aus Polyester/Baumwolle nach dem Thermosolverfahren zeichnete sich die Farbstoffzubereitung durch hohe Baumwollreserve aus. im Färben von Wickelkörpern aus texturierten Polyesterfasern (Kreuzspulfärbung) wurden keinerlei Abfiltration beobachtet.

### Beispiel 5

Beispiel 4 wurde wiederholt, jedoch anstelle des Dispergiermittels aus Beispiel 1 wurde die gleiche Menge des Dispergiermittels aus Beispiel 2 eingesetzt. Die Probe zeigte diesselben Eigenschaften wie in Beispiel 4. Der Schleudertest betrug 7/11/24/58.

### Vergleichsbeispiel C

Beispiel 4 wurde wiederholt, jedoch anstelle des Dispergiermittels aus Beispiel 1 wurde die gleiche Menge des Dispergiermittels aus Vergleichsbeispiel A eingesetzt. Man erhielt eine hochviskose Zubereitung, die in einer üblichen Rührwerkskugelmühle nicht mahlbar war.

### Vergleichsbeispiel D

Beispiel 4 wurde wiederholt, jedoch anstelle des Dispergiermittels aus Beispiel 1 wurde die gleiche Menge des Dispergiermittels aus Vergleichsbeispiel B eingesetzt.

Die erhaltene Dispersion war zunachst dünnflüssig und mahlbar. Der Schleudertest betrug: 8/12/22/58.

Nach längerer Standzeit (6 Wochen bei Zimmertemperatur) bzw. nach 3 Tagen bei 60°C stieg die Viskosität stark an, die Feinverteilung fiel deutlich ab. Der Schleudertest betrug jetzt: 70/16/9/5. Die Zubereitung zeigte auch schlechte Dispersionsstabilität unter Färbebedingungen. So wurden beim Färben von Wickelkörpern aus texturierten Polyesterfasern, sogenannte Kreuzspulen, starke Abfiltrationen und Unegalitäten erhalten.

### Beispiel 6

Polyester/Baumwoll-Garn (50:50), welches auf Kreuzspulen zu 700 g gewickelt war (Wickeldichte: 350 g/l), wurde im Flottenverhältnis von 1:15 in einem Färbeapparat gefärbt. Der spezifische Durchfluß betrug 30 1/kg·min bei einer Strömungsrichtung von Innen nach Außen für 4 Minuten und Außen nach Innen für 6 Minuten. Die Färbeflotte enthielt 2 g/l Farbstoff Vat Blue 6 (C.I. Nummer 69825), 2 g/l eines Polyacrylates, 0,5 g/l Komplexbildner und 2 g/l eines Standard-Dispergiermittels auf Basis eines Naphthalinsulfonsäure-Formaldehyd-Kondensates. Mit Essigsäure (30 Gew.-%) wurde ein pH von 4,5 eingestellt.

Zuerst wurde die Färbung des Polyester-Faseranteiles nachgestellt. Dazu wurde die Färbeflotte in 40 Minuten von 60°C auf 130°C geheizt und 40 Minuten bei 130°C gehalten, dann wurde auf 60°C abgekühlt. Anschließend erfolgte die Färbung des Baumwoll-Faseranteiles. Dazu wurden zur Flotte 24 ml/l NaOH (38° Be) und 5 g/l Hydrosulfit zugesetzt und dann 40 Minuten bei 60°C gefärbt.

Danach wurde das Färbebad im Überlauf gespült, bis das Spülwasser klar blieb. Nach Zusatz von 2 ml/l Wasserstoffperoxid und 0,5 g/1 eines Standard-Dispergiermittels auf Basis eines Naphthalinsulfonsäure-Formaldehyd-Kondensates wurde der Küpenfarbstoff anschließend in 10 Minuten bei 60°C oxidiert. Die Oxidationsflotte wurde abgelassen und es wurde kalt klargespült.

Zum Seifen versetzte man die frische Flotte mit 1 g/l eines Tensidgemisches, 0,5 g/1 Soda (calc.) und 0,5 g/l eines Standard-Dispergiermittels auf Basis eines Napthalinsulfonsäure-Formaldehyd-Kondensates und kochte 15 Minuten. Die Seifflotte wurde abgelassen, es wurde heiß und kalt gespült und die Kreuzspule herausgenommen und getrocknet.

Man erhielt eine blau gefärbte Kreuzspule, deren Außenseiten keine Ablagerungen von Farbstoffpigment zeigte. Die Reibechtheiten (trocken und naß) nach dem Verstricken des Garnes entsprachen den Standardwerten dieses Farbstoffes.

## Patentansprüche

1. Sulfonierte und oxidierte Inden-Polymerisate, erhältlich durch
(a) Polymerisation des bei der fraktionierenden Destillation der Spaltprodukte der thermischen Spaltung eines naphthenischen Rückstandsöls erhältlichen C₉-Schnittes, welcher als polymerisierbare Monomere 10 bis 50 Gew.-% Inden oder Inden-Derivaten der allgemeinen Formel I 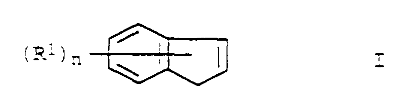 in der R¹ für Wasserstoff, Methyl oder Ethyl steht und n 1 oder 2 bedeutet, und 10 bis 60 Gew.-% Styrol oder Styrol-Derivaten der allgemeinen Formel II 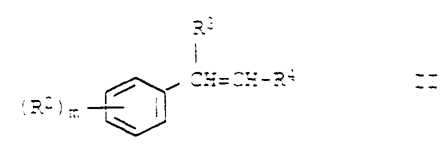 in der R², R³ und R⁴ für Wasserstoff, Methyl oder Ethyl stehen und m 1 oder 2 bedeutet, enthält,
(b) Sulfonierung des Polymerisates mit einem Sulfonierungsmittel bei Temperaturen von 40 bis 130°C und
(c) nicht kettenabbauende Oxidation des Polymerisates bei Temperaturen von 80 bis 180°C.

2. Sulfonierte und oxidierte Inden-Polymerisate nach Anspruch 1, erhältlich durch Sulfonierung mit Schwefelsäure oder Oleum bei Schritt (b).

3. Sulfonierte und oxidierte Inden-Polymerisate nach Anspruch 2, erhältlich durch Oxidation mit Schwefelsäure oder Oleum bei Schritt (c).

4. Sulfonierte und oxidierte Inden-Polymerisate nach den Ansprüchen 1 bis 3, bei denen das Inden-Polymerisat vor oder nach der Oxdidation (c) zusätzlich mit bis zu 30 Gew.-% Formaldehyd umgesetzt worden ist.

5. Verfahren zur Herstellung von sulfonierten und oxidierten Inden-Polymerisaten, gekennzeichnet durch
(a) Polymerisation des bei der fraktionierenden Destillation der Spaltprodukte der thermischen Spaltung eines naphthenischen Rückstandsöls erhältlichen C₉-Schnittes, welcher als polymerisierbare Monomere 10 bis 50 Gew.-% Inden oder Inden-Derivaten der allgemeinen Formel I 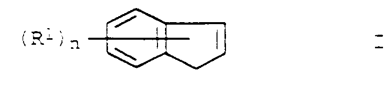 in der R¹ für Wasserstoff Methyl oder Ethyl steht und n 1 oder 2 bedeutet, und 10 bis 60 Gew.-% Styrol oder Styrol-Derivaten der allgemeinen Formel II 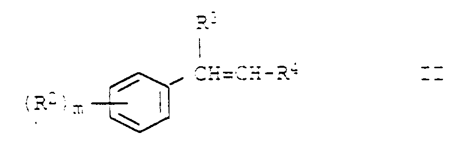 in der R², R³ und R⁴ für Wasserstoff, Methyl oder Ethyl stehen und m 1 oder 2 bedeutet, enthält,
(b) Sulfonierung des Polymerisates mit einem Sulfonierungsmittel bei Temperaturen von 40 bis 130°C und
(c) nicht kettenabbauende Oxidation des Polymerisates bei Temperaturen von 80 bis 180°C.

6. Verwendung von sulfonierten und oxidierten Inden-Polymerisaten gemäß den Ansprüchen 1 bis 1 als Dispergiermittel zur Anwendung in Farbstoff- und Pigmentpräparatienen und in Färbebädern, in der Bauindustrie, in Gerbereimittelformulierungen, in Düngemittelformulierungen, in Pflanzenschutzformulierungen, bei der Kunststoffherstellung, bei der Papierherstellung, bei der Wasserbehandlung und bei der metallbehandlung.

7. Farbstoff- und Pigmentpräparationen, enthaltend als Dispergiermittel 5 bis 500 Gew.-Teile, bezogen auf 100 Gew.- Teile Farbstoff bzw. Pigment, sulfonierte und oxidierte Inden-Polymerisate gemäß den Ansprüchen 1 bis 4.

## Claims

1. Sulfonated and oxidized indene polymers obtainable by
(a) polymerization of the C₉ cut obtainable in the fractional distillation of the products of the thermal cracking of a naphthenic residue oil, this C₉ cut containing as polymerizable monomers from 10 to 50% by weight of indene or indene derivatives of the general formula I 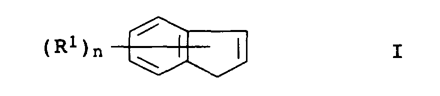 where R¹ is hydrogen, methyl or ethyl and n is 1 or 2, and from 10 to 60% by weight of styrene or styrene derivatives of the general formula II, 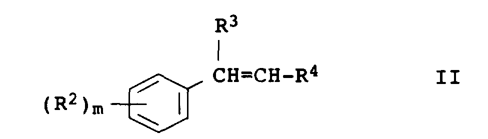 where R², R³ and R⁴ are each hydrogen, methyl or ethyl and m is 1 or 2,
(b) sulfonation of the polymer with a sulfonating agent at from 40 to 130°C and
(c) non-chain-degrading oxidation of the polymer at from 80 to 180°C.

2. Sulfonated and oxidized indene polymers as claimed in claim 1 obtainable by sulfonation with sulfuric acid or oleum in step (b).

3. Sulfonated and oxidized indene polymers as claimed in claim 2 obtainable by oxidation with sulfuric acid or oleum in step (c).

4. Sulfonated and oxidized indene polymers as claimed in any of claims 1 to 3 wherefor the indene polymer has been additionally reacted with up to 30% by weight of formaldehyde before or after the oxidation (c).

5. A process for preparing sulfonated and oxidized indene polymers characterized by
(a) polymerization of the C₉ cut obtainable in the fractional distillation of the products of the thermal cracking of a naphthenic residue oil, this C₉ cut containing as polymerizable monomers from 10 to 50% by weight of indene or indene derivatives of the general formula I 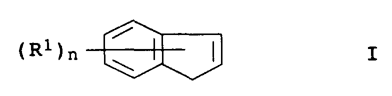 where R¹ is hydrogen, methyl or ethyl and n is 1 or 2, and from 10 to 60% by weight of styrene or styrene derivatives of the general formula II, 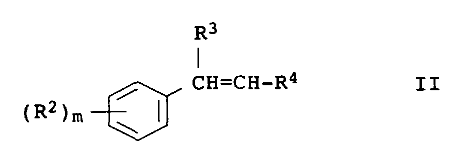 where R², R³ and R⁴ are each hydrogen, methyl or ethyl and m is 1 or 2,
(b) sulfonation of the polymer with a sulfonating agent at from 40 to 130°C and
(c) non-chain-degrading oxidation of the polymer at from 80 to 180°C.

6. The use of sulfonated and oxidized indene polymers as claimed in any of claims 1 to 4 as dispersants for use in dye and pigment preparations and in dyebaths, in the building industry, in tannery formulations, in fertilizer formulations, in crop protection formulations, in plastics production, in papermaking, in water treatment and in metal treatment.

7. Dye and pigment preparations including as dispersant from 5 to 500 parts by weight, based on 100 parts by weight of dye or pigment, of sulfonated and oxidized indene polymers as claimed in any of claims 1 to 4.

## Revendications

1. Polymères sulfonés et oxydés de l'indène, obtenus par
a) polymérisation de la coupe en C₉ obtenue par distillation fractionnée des produits du craquage thermique d'une huile résiduelle naphténique, qui contient, en tant que monomères polymérisables, 10 à 50 % en poids d'indène ou de dérivés de l'indène de formule générale I 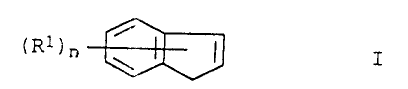 dans laquelle R¹ est mis pour un atome d'hydrogène, un groupement méthyle ou éthyle et n vaut 1 ou 2, et 10 à 60 % en poids de styrène ou de dérivés du styrène de formule générale II 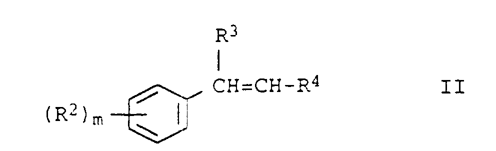 dans laquelle R², R³ et R⁴ sont mis pour des atomes d'hydrogène, des groupements méthyle ou éthyle et m vaut 1 ou 2,
b) sulfonation du polymère avec un agent sulfonant à des températures de 40 à 130°C et
c) oxydation du polymère ne dégradant pas sa chaîne à des températures de 80 à 180°C.

2. Polymères sulfonés et oxydés de l'indène selon la revendication 1, obtenus par sulfonation avec l'acide sulfurique ou l'oléum, dans l'étape b).

3. Polymères sulfonés et oxydés de l'indène selon la revendication 2, obtenus par oxydation par l'ac de sulfurique ou l'oléum, dans l'étape c).

4. Polymères sulfonés et oxydés de l'indène selon l'une quelconque des revendications 1 à 3, dans lesquels on fait réagir le polymère de l'indène avec jusqu'à 30 % en poids de formaldéhyde, avant ou après l'oxydation c).

5. Procédé de préparation de polymères sulfonés et oxydés de l'indène, caractérisé par
a) la polymérisation de la coupe en C₉ obtenue par distillation fractionnée des produits du craquage thermique d'une huile résiduelle naphténique, qui contient, en tant que monomères polymérisables, 10 à 50 % en poids d'indène ou de dérivés de l'indène de formule générale I 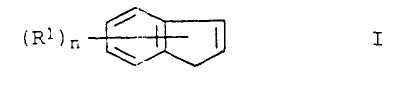 dans laquelle R¹ est mis pour un atome d'hydrogène, un groupement méthyle ou éthyle et n vaut 1 ou 2, et 10 à 60 % en poids de styrène ou de dérivés du styrène de formule générale II 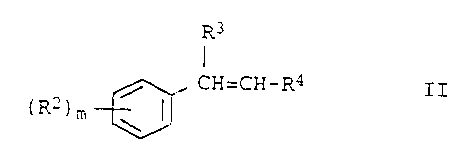 dans laquelle R², R³ et R⁴ sont mis pour des atomes d'hydrogène, des groupements méthyle ou éthyle et m vaut 1 ou 2,
b) la sulfonation du polymère avec un agent sulfonant à des températures de 40 à 130°C et
c) l'oxydation du polymère ne dégradant pas sa chaîne à des températures de 80 à 180°C.

6. Utilisation de polymères sulfonés et oxydés de l'indène selon l'une quelconque des revendications 1 à 4 en tant qu'agent dispersant pour des préparations de colorants et de pigments et pour des bains colorants, dans l'industrie du bâtiment, dans des formulations d'agents de tannage, dans des formulations d'engrais, dans des formulations phytopharmaceutiques, pour la fabrication de matières plastiques, pour la fabrication de papier, pour le traitement de l'eau et pour le traitement du métal.

7. Préparations de colorants et de pigments, contenant, en tant qu'agent dispersant, 5 à 500 parties en poids, par rapport à 100 parties en poids de colorant ou de pigment, de polymères sulfonés et oxydés de l'indène selon l'une quelconque des revendications 1 à 4.
